# EUROPÄISCHE PATENTSCHRIFT

(11) **EP 3 724 021 B1**
(45) Veröffentlichungstag und Bekanntmachung des Hinweises auf die Patenterteilung: **19.10.2022**
(21) Anmeldenummer: 18822300.2
(22) Anmeldetag: 11.12.2018
(51) Int. Cl.: B60L 3/00, H01H 79/00, H02H 5/04, H02H 7/18, H01H 37/76, H01M 10/42, H01M 50/502

(54) **ELEKTROCHEMISCHES ENERGIESPEICHERMODUL UND FAHRZEUG**
ELECTROCHEMICAL ENERGY STORAGE MODULE AND VEHICLE
MODULE ÉLECTROCHIMIQUE DE STOCKAGE D'ÉNERGIE ET VÉHICULE

(30) Priorität: 13.12.2017 DE 102017222642
(43) Veröffentlichungstag der Anmeldung: 21.10.2020
(73) Patentinhaber: Bayerische Motoren Werke Aktiengesellschaft, 80809 München (DE)
(72) Erfinder: SCHMIDT, Jan Philipp, 80997 München (DE)
(86) Internationale Anmeldenummer: PCT/EP2018/084282
(87) Internationale Veröffentlichungsnummer: WO 2019/115496

(56) Entgegenhaltungen:
- EP-A2- 1 408 574
- DE-A1-102012 023 331
- US-A1- 2016 308 191
- US-B1- 6 275 005

## Beschreibung

Die vorliegende Erfindung betrifft ein elektrochemisches Energiespeichermodul, insbesondere eine Lithium-Ionen-Batterie, und ein Fahrzeug mit einem solchen Energiespeichermodul.

Durch die alltägliche Nutzung von tragbaren elektronischen Geräten und die zunehmende Verbreitung von elektromotorisch betriebenen Fahrzeugen besteht ein Bedarf an elektrochemischen Energiespeichern, die auch im dauerhaften Betrieb und/oder bei hoher Leistungsabgabe zuverlässig und sicher arbeiten. Es sind Energiespeicher bekannt, die mehrere parallel oder in Serie geschaltete elektrochemische Zellen enthalten. Um diese Energiespeicher auch nach Ausfallen einer oder mehrerer Zellen weiterbetreiben zu können, können Schaltungen, beispielsweise sog. inverse Sicherungen (Antifuse) vorgesehen sein, die die ausgefallene Zelle im Bedarfsfall überbrücken.

US 6,275,005 B1 offenbart ein Batteriesystem mit einer elektrischen Speicherzelle, einem Bypass-Schaltungspfad mit einem ersten elektrischen Leiter, einem zweiten elektrischen Leiter, einem Kurzschluss-Spalt zwischen dem ersten und zweiten elektrischen Leiter, einer Masse eines schmelzbaren Materials und einer Wärmequelle, die so betrieben werden kann, dass sie zumindest einen Teil der Masse des schmelzbaren Materials schmilzt und dadurch den Kurzschlussspalt schließt, so dass der erste elektrische Leiter in elektrischer Verbindung mit dem zweiten elektrischen Leiter steht.

US 2016/0308191 A1 offenbart ein Batteriesystem mit einer elektrischen Speicherzelle, welche mit einem Bypass-Schaltungspfad versehen ist, der einen ersten elektrischen Leiter, einen zweiten elektrischen Leiter und einen Kurzschluss-Spalt zwischen dem ersten elektrischen Leiter und dem zweiten elektrischen Leiter aufweist. Der erste und der zweite elektrische Leiter und eine nicht leitende Barriere definieren eine geschlossene Kammer, die eine Masse eines schmelzbaren Materials und eine Feder umschließt, die so positioniert ist, dass sie die Masse des schmelzbaren Materials in den Kurzschluss-Spalt drückt, wenn die Masse des schmelzbaren Materials mittels einer Wärmequelle zumindest teilweise geschmolzen wird, so dass der erste elektrische Leiter in elektrischer Verbindung mit dem zweiten elektrischen Leiter steht.

EP 1 408 574 A2 offenbart ein Batteriegerät mit einer Vielzahl von Batterien, die jeweils aufweisen: einen thermisch ansprechenden Schalter, eine erste leitende Platte, die mit einem ersten Anschluss des thermisch ansprechenden Schalters verbunden ist, eine zweite leitende Platte, die mit einem gemeinsamen Anschluss des thermisch ansprechenden Schalters verbunden ist, und eine dritte leitende Platte, die als Bypass funktioniert, wenn sie mit einem zweiten Anschluss des thermisch ansprechenden Schalters verbunden ist. Im Normalbetrieb ist der thermisch ansprechende Schalter in Kontakt mit dem ersten festen Kontakt des beweglichen Kontakts, so dass die erste und zweite leitende Platte elektrisch verbunden sind. Wenn sich die Batterie übermäßig erwärmt und eine maximal zulässige Temperatur überschreitet, wird der Bimetall-Streifen umgekehrt, so dass der bewegliche Kontakt mit dem zweiten festen Kontakt in Kontakt kommt und somit die zweite und dritte leitende Platte elektrisch verbunden werden.

DE10 2012 023 331 A1 offenbart eine Energiespeichereinheit mit einer Energiespeicherzelle, einem zur Energiespeicherzelle in Serie geschalteten ersten Schalter und einem zur Energiespeicherzelle parallel geschalteten zweiten Schalter, wobei die Schalter eingerichtet sind, einen vorbestimmten Strom einer mit der Energiespeicherzelle verbundenen Hauptstromleitung entweder über den ersten Schalter oder über den zweiten Schalter zu leiten, wobei ein an die Schalter zu deren Steuerung gekoppelter µ-Kontroller (µC) der Energiespeicherzelle ausgebildet ist, den Strom der Energiespeicherzelle zu einer Informationsübertragung zu modulieren. Auf diese Weise gelingt es, die Hauptstromleitung gleichzeitig zur Übertragung von Informationsdaten der Energiespeicherzelle zu nutzen und einzelne Energiespeicherzellen gezielt zu steuern.

Es ist eine Aufgabe der vorliegenden Erfindung, eine zuverlässige Überbrückung einer oder mehrerer Zellen auf einfache Weise zu gewährleisten.

Diese Aufgabe wird gelöst durch ein elektrochemisches Energiespeichermodul und ein Fahrzeug gemäß Anspruch 1 bzw. 8.

Ein erfindungsgemäßes elektrochemisches Energiespeichermodul, bei welchem es sich insbesondere um eine Lithium-Ionen-Batterie handelt, weist mindestens eine elektrochemische Energiespeicherzelle und mindestens eine Überbrückungsvorrichtung auf, die mit der mindestens einen Energiespeicherzelle elektrisch parallel geschaltet ist. Die mindestens eine Überbrückungsvorrichtung weist einen ersten Stromleiter mit mindestens einer Überbrückungsstelle, die einen Überbrückungsstellenquerschnitt aufweist, und einen vom ersten Stromleiter durch einen Spalt beabstandeten zweiten Stromleiter auf. Ferner weist die Überbrückungsvorrichtung einen Überbrückungsschalter zum Herstellen einer ersten partiellen elektrischen Verbindung zwischen dem ersten Stromleiter und dem zweiten Stromleiter und ein im Bereich der mindestens einen Überbrückungsstelle angeordnetes Überbrückungsmaterial auf. Dabei ist bzw. sind der Überbrückungsstellenquerschnitt und/oder das Überbrückungsmaterial derart eingerichtet, dass das im Bereich der mindestens einen Überbrückungsstelle angeordnete Überbrückungsmaterial infolge einer Erwärmung der mindestens einen Überbrückungsstelle schmilzt und dabei eine zweite partielle elektrische Verbindung zwischen dem ersten Stromleiter und dem zweiten Stromleiter herstellt. Die Erwärmung der mindestens einen Überbrückungsstelle wird durch einen elektrischen Strom verursacht, der durch den Überbrückungsstellenquerschnitt nach Herstellen der ersten partiellen elektrischen Verbindung fließt.

Ein erfindungsgemäßes Fahrzeug, insbesondere Kraftfahrzeug, weist ein erfindungsgemäßes elektrochemisches Energiespeichermodul auf.

Ein Aspekt der Erfindung basiert auf dem Ansatz, eine oder mehrere Energiespeicherzellen eines elektrochemischen Energiespeichermoduls mittels einer parallelgeschalteten Überbrückungsvorrichtung zu überbrücken, indem durch Herstellen einer ersten partiellen elektrischen Verbindung zwischen einem ersten Stromleiter und einem vom ersten Stromleiter durch einen Spalt beabstandeten zweiten Stromleiter ein Herstellen einer oder mehrerer weiterer partieller elektrischer Verbindung zwischen dem ersten und zweiten Stromleiter ausgelöst wird. Dazu ist ein Überbrückungsschalter vorgesehen, beispielsweise eine inverse Sicherung (sog. Antifuse), der in einem geschlossenen Zustand die erste partielle elektrische Verbindung herstellt, so dass zwischen dem ersten und zweiten Stromleiter ein elektrischer Strom fließt, welcher den ersten Stromleiter im Bereich der mindestens einen Überbrückungsstelle erwärmt und dadurch das im Bereich der Überbrückungsstelle angeordnete Überbrückungsmaterial zum Schmelzen bringt. Das Überbrückungsmaterial und/oder der Überbrückungsstellenquerschnitt ist bzw. sind vorzugsweise so gewählt und/oder geformt und/oder dimensioniert, dass das Überbrückungsmaterial bei dem nach Herstellen der ersten elektrischen Verbindung zu erwartenden bzw. auftretenden Stromfluss schmilzt. Das geschmolzene Überbrückungsmaterial überbrückt dann im Bereich der Überbrückungsstelle den Spalt zwischen dem ersten und dem zweiten Stromleiter, beispielsweise indem es den ersten und zweiten Stromleiter zumindest teilweise benetzt und dann erstarrt, und bildet somit eine zweite bzw. weitere partielle elektrische Verbindung zwischen dem ersten und zweiten Stromleiter.

Durch das Herstellen der zweiten partiellen elektrischen Verbindung wird der Kontaktwiderstand zwischen dem ersten und zweiten Stromleiter gegenüber dem Kontaktwiderstand, der beim ausschließlichen Bestehen der ersten partiellen elektrischen Verbindung auftritt, verringert. Dadurch wird der Stromfluss durch den ersten und zweiten Leiter insgesamt erhöht, so dass die Energiespeicherzelle zuverlässig und effizient überbrückt wird.

Erwärmt sich die Energiespeicherzelle des Energiespeichermoduls beispielsweise auf eine Temperatur oberhalb einer vorgegebene Betriebstemperaturschwelle, etwa 50°C, vorzugsweise 60°C, insbesondere 70°C, wechselt der Überbrückungsschalter von einem offenen Zustand in einen geschlossenen Zustand. Der Überbrückungsschalter kann dabei aktiv betätigt werden oder automatisch schließen. Der daraufhin durch den ersten und zweiten Stromleiter fließende elektrische Strom erwärmt den ersten Stromleiter im Bereich der Überbrückungsstelle durch den ohmschen Widerstand, der durch den Überbrückungsstellenquerschnitt definiert ist, derart, dass das Überbrückungsmaterial schmilzt und den ersten und zweiten Stromleiter mit der zweiten partiellen elektrischen Verbindung elektrisch leitend verbindet. Dadurch erhöht sich die vom elektrischen Strom zwischen dem ersten und zweiten Stromleiter durchflossene Querschnittsfläche, so dass der erste Stromleiter im Bereich der Überbrückungsstelle wieder abkühlt und das geschmolzene Überbrückungsmaterial wieder erstarrt. Dabei wird die zweite elektrische Verbindung fixiert.

Insgesamt ermöglicht die Erfindung eine zuverlässige Überbrückung einer oder mehrerer Energiespeicherzellen auf einfache Weise.

Der erste und/oder der zweite Stromleiter weist bzw. weisen mehrere Überbrückungsstellen mit unterschiedlichen Überbrückungsstellenquerschnitten auf, in deren Bereich jeweils Überbrückungsmaterial angeordnet ist. Dabei sind die Überbrückungsstellenquerschnitte und/oder ist das Überbrückungsmaterial im Bereich des jeweiligen Überbrückungsstellenquerschnitts derart eingerichtet, dass das Überbrückungsmaterial im Bereich des jeweiligen Überbrückungsstellenquerschnitts infolge einer Erwärmung der jeweiligen Überbrückungsstelle, die durch den elektrischen Strom verursacht wird, der durch den jeweiligen Überbrückungsstellenquerschnitt nach Herstellen einer oder mehrerer partieller elektrischer Verbindungen zwischen dem ersten Stromleiter und dem zweiten Stromleiter im Bereich von Überbrückungsstellen mit geringerem Überbrückungsstellenquerschnitt fließt, schmilzt und dabei eine weitere partielle elektrische Verbindung zwischen dem ersten Stromleiter und dem zweiten Stromleiter herstellt.

Die unterschiedlichen Überbrückungsstellenquerschnitte und/oder das im Bereich der jeweiligen Überbrückungsstellen angeordnete Überbrückungsmaterial sind bzw. ist in der Weise eingerichtet, insbesondere aufeinander abgestimmt und/oder angeordnet, dass nach Herstellen einer partiellen elektrischen Verbindung im Bereich einer Überbrückungsstelle das Überbrückungsmaterial an einer anderen Überbrückungsstelle mit einem größeren, insbesondere dem nächstgrößeren, Überbrückungsstellenquerschnitt aufgrund des durch die zuvor hergestellte partielle Verbindung erhöhten Stromflusses schmilzt und eine weitere partielle elektrische Verbindung herstellt. Das Herstellen einer partiellen elektrischen Verbindung im Bereich einer Überbrückungsstelle mit einem kleineren, insbesondere dem nächstkleineren, Überbrückungsstellenquerschnitt ist somit Voraussetzung für das nachfolgende Herstellen weiterer Verbindungen. Dadurch kann ein kaskadenartiges Herstellen der partiellen elektrischen Verbindungen erreicht werden, infolge dessen der Stromfluss durch den ersten und zweiten Stromleiter weiter steigt und der Kontaktwiderstand weiter verringert wird.

Der durch den ersten bzw. zweiten Stromleiter fließende elektrische Strom wird dabei insbesondere von dem Überbrückungsstellenquerschnitt derjenigen Überbrückungsstelle begrenzt, in deren Bereich noch keine partielle elektrische Verbindung hergestellt ist und die den kleinsten Überbrückungsstellenquerschnitt aller Überbrückungsstellen, in deren Bereich noch keine partielle elektrische Verbindung hergestellt ist, aufweist. Die Überbrückungsstellenquerschnitte und/oder das im Bereich der Überbrückungsstellen angeordnete Überbrückungsmaterial sind bzw. ist daher derart eingerichtet, dass der durch den jeweiligen Überbrückungsstellenquerschnitt begrenzte Stromfluss ausreicht, um eine Erwärmung herbeizuführen, in deren Folge das Überbrückungsmaterial im Bereich der jeweiligen Überbrückungsstelle schmilzt. Dadurch wird eine weitere partielle elektrische Verbindung an einer Überbrückungsstelle zuverlässig hergestellt, wenn der durch den zugehörigen Überbrückungsstellenquerschnitt fließende elektrische Strom nicht durch einen anderen, geringeren Überbrückungsstellenquerschnitt begrenzt wird.

Vorzugsweise sind die Überbrückungsstellen entlang des ersten und/oder zweiten Stromleiters unter Berücksichtigung ihres jeweiligen Überbrückungsstellenquerschnittes derart angeordnet, dass die Überbrückungsstellenquerschnitte zum Überbrückungsschalter hin abnehmen. Dadurch kann vermieden werden, dass Überbrückungsstellen, in deren Bereich noch keine partielle elektrische Verbindung hergestellt wurde, kurzgeschlossen werden. Diese Anordnung ermöglicht dadurch eine Erhöhung der Zuverlässigkeit der Überbrückungsvorrichtung.

In einer weiteren bevorzugten Ausführungsform ist der Überbrückungsschalter als Bimetallschalter ausgebildet. Der Bimetallschalter ist dabei vorzugsweise am ersten oder am zweiten Stromleiter fixiert und dazu eingerichtet, sich bei einer Temperaturerhöhung zum zweiten bzw. ersten Stromleiter hin zu biegen. Erreicht oder Überschreitet die Temperatur des Bimetallschalters einen vorgegebenen Temperaturschwellenwert, beispielsweise eine maximal zulässigen Betriebstemperatur der Energiespeicherzelle von 50 C, vorzugsweise 60 C, insbesondere 70 C, kontaktiert der Bimetallschalter den zweiten bzw. ersten Stromleiter. Dadurch kann das Überbrücken der Energiespeicherzelle, insbesondere das kaskadenartige Herstellen der weiteren partiellen elektrischen Verbindungen, automatisch ausgelöst werden.

Zusätzlich kann der Überbrückungsschalter einen Heizwiderstand aufweisen, der dazu eingerichtet ist, den Bimetallschalter zu betätigen. Dadurch kann, beispielsweise von einer Steuerungseinrichtung zur Überwachung des Energiespeichers, die erste partielle elektrische Verbindung bei Bedarf durch Bestromen des Heizwiderstands aktiv hergestellt werden.

In einer weiteren bevorzugten Ausführungsform ist im Bereich des Überbrückungsschalters auf dem ersten oder zweiten Stromleiter ein Überbrückungsmaterial angeordnet und derart eingerichtet, dass es infolge einer Erwärmung des Überbrückungsschalters und/oder des ersten Stromleiters und/oder des zweiten Stromleiters, die durch einen elektrischen Strom verursacht wird, der durch den Überbrückungsschalter und/oder den ersten Stromleiter und/oder den zweiten Stromleiter fließt, schmilzt und beim Wiedererstarren den Überbrückungsschalter am ersten bzw. zweiten Stromleiter fixiert. Dadurch kann ein unbeabsichtigtes Öffnen des Überbrückungsschalters nach Herstellen der ersten partiellen elektrischen Verbindung, etwa durch Zurückbiegen des Bimetallschalters bei einer Temperaturabnahme der Energiespeicherzelle, die durch das Herstellen der ersten und/oder der weiteren elektrischen partiellen Verbindungen verursacht wird, zuverlässig vermieden werden.

In einer weiteren bevorzugten Ausführungsform ist das Überbrückungsmaterial Zinn. Durch seine Formbarkeit und eine Schmelztemperatur von etwa 232°C eignet sich Zinn besonders gut zum Aufbringen auf den ersten und/oder zweiten Stromleiter im Bereich der Überbrückungsstellen und dazu, durch eine stromflussbedingte Erwärmung zu schmelzen und eine weitere partielle elektrische Verbindung zwischen den Stromleitern herzustellen.

In einer weiteren bevorzugten Ausführungsform ist in dem Spalt zwischen dem ersten und zweiten Stromleiter ein Isolationsmaterial angeordnet. Dabei ist das Isolationsmaterial vorzugsweise elektrisch und/oder thermisch isolierend und weist insbesondere einen geringe Wärmeausdehnungskoeffizienten auf. Dadurch kann eine Spaltbreite des Spalts auch bei einer Erwärmung, beispielsweise aufgrund eines ansteigenden Stromflusses infolge weiterer hergestellter elektrischer Verbindungen, des ersten und/oder zweiten Stromleiters im Wesentlichen konstant gehalten und somit ein unbeabsichtigtes Trennen der partiellen elektrischen Verbindungen vermieden werden.

In einer weiteren bevorzugten Ausführungsform ist der Überbrückungsschalter dazu eingerichtet, die erste partielle elektrische Verbindung zwischen dem ersten Stromleiter und dem zweiten Stromleiter bei Erreichen oder Überschreiten eines vorgegebenen Temperaturschwellenwerts der mindestens einen Energiespeicherzelle, insbesondere einer maximal zulässigen Betriebstemperatur, herzustellen. Der vorgegebene Temperaturschwellenwert kann beispielsweise 50°C, vorzugsweise 60°C, insbesondere 70°C betragen. Dadurch kann die erste partielle elektrische Verbindung zuverlässig hergestellt werden, bevor eine weitere Temperaturerhöhung der mindestens einen Energiespeicherzelle eine Zerstörung oder zumindest Beschädigung der Energiespeicherzelle, insbesondere des Energiespeichermoduls, verursacht.

In einer weiteren bevorzugten Ausführungsform weist das Energiespeichermodul eine Steuerungseinrichtung auf, die dazu eingerichtet ist, die erste partielle elektrische Verbindung bei Erreichen oder Überschreiten des vorgegebenen Temperaturschwellenwerts der mindestens einen Energiespeicherzelle mittels des Überbrückungsschalters herzustellen. Vorzugsweise weist die Steuerungseinrichtung einen Temperatur- und/oder Leistungssensor auf, der dazu eingerichtet ist, eine Temperatur der mindestens einen Energiespeicherzelle bzw. eine von der mindestens einen Energiespeicherzelle abgegebene elektrische Leistung zu erfassen. Die Steuerungseinrichtung betätigt dann auf Grundlage der erfassten Temperatur bzw. elektrischen Leistung, gegebenenfalls auch unter Berücksichtigung weiterer, einen Betriebszustand der Energiespeicherzelle charakterisierenden Parameter und/oder Sensordaten, den Überbrückungsschalter, um das Herstellen mehrerer partieller elektrischer Verbindungen auszulösen und die Energiespeicherzelle im Energiespeichermodul zu überbrücken. Dadurch kann die Überbrückungsvorrichtung besonders zuverlässig aktiviert werden.

Alternativ oder zusätzlich ist die Steuerungseinrichtung dazu eingerichtet, die erste partielle elektrische Verbindung bei Detektion eines internen Kurzschlusses der Energiespeicherzelle, bei Detektion eines Aufpralls und/oder bei Detektion eines anormalen Spannungsverhaltens mittels des Überbrückungsschalters herzustellen. Dazu weist die Steuerungseinrichtung vorzugsweise entsprechende Sensoren auf und/oder ist mit entsprechenden Sensoren, die im Fahrzeug oder der Energiespeicherzelle verbaut sind, verbunden. Dadurch kann insbesondere eine, gegebenenfalls weitere, Beschädigung der Energiespeicherzelle und/oder des Fahrzeugs vermieden werden.

Die Steuerungseinrichtung kann auch dazu eingerichtet sein, die erste partielle elektrische Verbindung bei Detektion eines Zellfehlers, durch den die Reichweite und/oder Leistungsfähigkeit des Fahrzeugs, vorzugsweise zu mehr als 30 %, beschränkt wird, mittels des Überbrückungsschalters herzustellen. Das Feststellen eines Einbruchs der Reichweite und/oder Leistungsfähigkeit kann zuverlässig als Indikator dienen, dass eine Fehlfunktion, insbesondere eine Beschädigung, der Energiespeicherzelle vorliegt. Somit kann der Betrieb einer fehlerhaft arbeitenden, insbesondere beschädigten, Energiespeicherzelle vermieden werden.

Erfindungsgemäß weist der erste Stromleiter einen ersten Stromleiterquerschnitt und/oder der zweite Stromleiter einen zweiten Stromleiterquerschnitt auf. Dabei ist der Überbrückungsstellenquerschnitt der mindestens einen Überbrückungsstelle kleiner ist als der erste und/oder der zweite Stromleiterquerschnitt. Die mindestens eine Überbrückungsstelle ist beispielsweise als Verjüngung des ersten und/oder zweiten Stromleiters ausgebildet. Dadurch kann sichergestellt werden, dass eine, insbesondere kontrollierte, Erwärmung des ersten und/oder zweiten Stromleiters durch einen Stromfluss im Wesentlichen im Bereich der Überbrückungsstellen stattfindet.

Weitere Merkmale, Vorteile und Anwendungsmöglichkeiten der Erfindung ergeben sich aus der nachfolgenden Beschreibung im Zusammenhang mit den Figuren, in denen durchgängig dieselben Bezugszeichen für dieselben oder einander entsprechende Elemente der Erfindung verwendet werden. Es zeigen wenigstens teilweise schematisch:
- Fig. 1: ein Beispiel eines Energiespeichermoduls mit einer Überbrückungsvorrichtung; und
- Fig. 2: ein Beispiel eines Überbrückungsschalters.

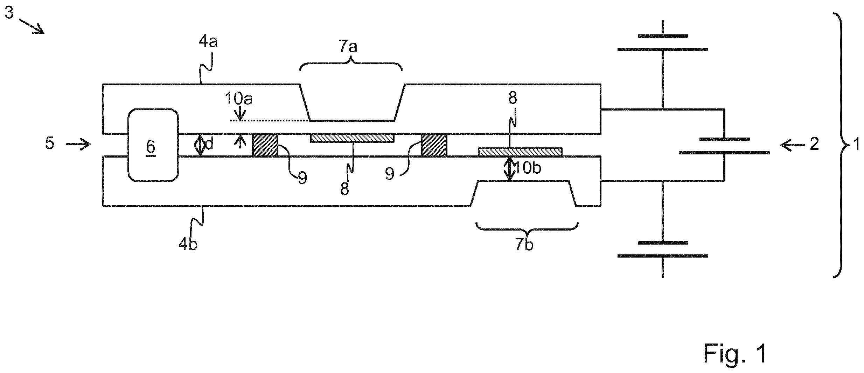

Figur 1 zeigt ein Beispiel eines Energiespeichermoduls 1, das mehrere Energiespeicherzellen und eine Überbrückungsvorrichtung 3 zum Überbrücken einer Energiespeicherzelle 2 aufweist.

Die Überbrückungsvorrichtung 3 ist mit der Energiespeicherzelle 2 elektrisch parallel geschaltet und weist einen mit einem negativen Pol der Energiespeicherzelle 2 verbundenen ersten Stromleiter 4a und einen mit einem positiven Pol der Energiespeicherzelle 2 verbundenen zweiten Stromleiter 4b auf. Die beiden Stromleiter 4a, 4b sind durch einen Spalt 5 mit einer Spaltbreite d voneinander getrennt. Ein Überbrückungsschalter 6 ist dazu eingerichtet, über den Spalt 5 hinweg eine erste partielle, d.h. räumlich begrenzte, elektrisch leitende Verbindung zwischen den beiden Stromleitern 4a, 4b herzustellen. Zusätzlich weist der erste Stromleiter 4a eine erste Überbrückungsstelle 7a und der zweite Stromleiter 4b eine zweite Überbrückungsstelle 7b auf, in deren Bereich am ersten bzw. zweiten Stromleiter 4a bzw. 4b jeweils ein Überbrückungsmaterial 8 vorgesehen ist, durch das - wie weiter unten noch näher beschrieben wird - eine zweite bzw. dritte partielle elektrisch leitende Verbindung zwischen den beiden Stromleitern 4a, 4b herstellbar ist.

Die Spaltbreite d des Spalts 5 zwischen den Stromleitern 4a, 4b ist groß genug, um einen Durchschlag der anliegenden Spannung der Energiespeicherzelle 2 zu vermeiden. Die Spaltbreite d beträgt beispielsweise mehr als 0,5 mm, vorzugsweise mehr als 1 mm, insbesondere mehr als 2 mm. Um die Beabstandung der beiden Stromleiter 4a, 4b und/oder die elektrische Isolierung des ersten Stromleiters 4a vom zweiten Stromleiter 4b sicherzustellen, sind im Spalt 5 zwischen den beiden Stromleitern 4a, 4b vorzugsweise Isolationselemente 9 aus einem elektrisch isolierenden Material mit einem geringen Wärmeausdehnungskoeffizienten angeordnet.

Ist der Überbrückungsschalter 6 geschlossen, wird der Spalt 5 durch den Überbrückungsschalter 6 überbrückt und damit die erste partielle elektrische Verbindung zwischen den Stromleitern 4a und 4b hergestellt. Der Überbrückungsschalter 6 kann beispielsweise als elektrisch schaltbarer Halbleiterschalter ausgebildet sein, der bei Vorliegen eines Überbrückungssignals einen Stromfluss zwischen dem ersten und zweiten Stromleiter 4a, 4b ermöglicht. Alternativ kann der Überbrückungsschalter 6 als Temperaturschalter, insbesondere als Bimetallschalter, eingerichtet sein. Vorzugsweise ist ein solcher Bimetallschalter oder -streifen mit einem Ende am ersten oder zweiten Stromleiter 4a bzw. 4b befestigt und so ausgestaltet, dass er sich bei einer Erwärmung über einen Temperaturschwellenwert hinaus derart zum zweiten bzw. zweiten Stromleiter 4a, 4b hin verbiegt, dass eine elektrische Verbindung zwischen dem ersten und zweiten Stromleiter 4a und 4b hergestellt wird.

Durch die mit Hilfe des Überbrückungsschalters 6 hergestellte erste partielle elektrische Verbindung fließt ein elektrischer Strom durch die beiden Stromleiter 4a und 4b und damit auch durch einen ersten Überbrückungsstellenquerschnitt 10a des ersten Stromleiters 4a im Bereich der ersten Überbrückungsstelle 7a und durch einen zweiten Überbrückungsstellenquerschnitt 10b des zweiten Stromleiters 4b im Bereich der zweiten Überbrückungsstelle 7b.

Der erste Überbrückungsstellenquerschnitt 10a ist dabei so ausgelegt, dass der nach Herstellen der ersten partiellen elektrischen Verbindung durch den ersten Überbrückungsstellenquerschnitt 10a fließende elektrische Strom eine Erwärmung des ersten Stromleiters 4a im Bereich der ersten Überbrückungsstelle 7a verursacht, die ausreicht, um das im Bereich der ersten Überbrückungsstelle 7a angeordnete Überbrückungsmaterial 8 zu schmelzen. Beispielsweise kann der erste Überbrückungsstellenquerschnitt 10a auf den zu erwartenden Stromfluss nach Schließen des Überbrückungsschalters 6 angepasst sein, insbesondere derart dimensioniert sein, dass der Stromfluss eine Erwärmung zur Folge hat, die zum Schmelzen des Überbrückungsmaterials 8 ausreicht.

Alternativ oder zusätzlich kann das im Bereich der ersten Überbrückungsstelle 7a angeordnete Überbrückungsmaterial 8 so gewählt und/oder geformt und/oder dimensioniert sein, dass es bei der genannten Erwärmung des ersten Stromleiters 4a im Bereich der ersten Überbrückungsstelle 7a schmilzt und an dieser Stelle eine elektrische Verbindung zwischen den beiden Stromleitern 4a und 4b herstellt. Beispielsweise kann das Überbrückungsmaterial 8 im Bereich der ersten Überbrückungsstelle 7a einen auf die genannte Erwärmung angepassten Schmelzpunkt aufweisen und/oder in Form einer Schicht auf dem ersten Stromleiter 4a, insbesondere im Spalt 5, angeordnet sein, wobei die Schicht so dimensioniert ist, dass sie durch die Erwärmung schmilzt.

Das im Bereich der ersten Überbrückungsstelle 7a geschmolzene Überbrückungsmaterial 8 tritt in elektrischen Kontakt mit dem zweiten Stromleiter 4b, beispielsweise aufgrund der Oberflächenspannung des Überbrückungsmaterials 8, durch welche das geschmolzene Überbrückungsmaterial 8 in den Spalt 5 hinein gezogen wird. Dadurch bildet das Überbrückungsmaterial 8 im Bereich der ersten Überbrückungsstelle 7a - zusätzlich zur ersten partiellen elektrischen Verbindung durch den Überbrückungsschalter 6 - eine zweite partielle elektrische Verbindung. Um die Kontaktierung des ersten und zweiten Stromleiters 4a, 4b durch das geschmolzene Überbrückungsmaterial 8 zu erleichtern und/oder zuverlässiger zu machen, ist die Spaltbreite d vorzugsweise auf die Oberflächenspannung und/oder die Menge des im Bereich der Überbrückungsstelle 7a angeordneten Materials 8 hin angepasst.

Da der elektrische Strom im Bereich der ersten Überbrückungsstelle 7a nun nicht mehr ausschließlich durch den ersten Überbrückungsstellenquerschnitt 10a, sondern auch über die zweite partielle elektrische Verbindung zum zweiten Stromleiter 4b fließt, sinkt die durch den Stromfluss verursachte Temperatur im Bereich der ersten Überbrückungsstelle 7a. Dadurch erstarrt das im Bereich der ersten Überbrückungsstelle 7a geschmolzene Überbrückungsmaterial 8 wieder und fixiert somit die zweite partielle elektrische Verbindung.

Durch das Herstellen der zweiten partiellen elektrischen Verbindung, die sich insbesondere über die gesamte Fläche der ersten Überbrückungsstelle 7a erstreckt, wird der Kontaktwiderstand zwischen dem ersten und zweiten Stromleiter 4a, 4b, der zunächst im Wesentlichen durch die durch das Überbrückungselement 8 hergestellte erste partielle Verbindung bestimmt wird, gesenkt, so dass auf einfache und zuverlässige Weise eine niederohmige Überbrückung der Zelle 2 ermöglicht wird.

Zudem können der erste und zweite Stromleiter 4a, 4b nun einen höheren elektrischen Strom führen. Dies kann ausgenutzt werden, indem analog zum ersten Überbrückungsstellenquerschnitt 10a bzw. zu dem im Bereich der ersten Überbrückungsstelle 7a angeordneten Überbrückungsmaterial 8 der zweite Überbrückungsstellenquerschnitt 10b bzw. das im Bereich der zweiten Überbrückungsstelle 7b angeordnete Überbrückungsmaterial 8 in der Weise eingerichtet ist bzw. sind, dass das im Bereich der zweiten Überbrückungsstelle 7b angeordnete Überbrückungsmaterial 8 schmilzt, wenn sich der zweite Stromleiter 4b im Bereich der zweiten Überbrückungsstelle 7b erwärmt. Die Erwärmung des zweiten Stromleiters 4b wird dabei durch den nach Herstellen der zweiten partiellen elektrischen Verbindung durch den zweiten Überbrückungsstellenquerschnitt 10b fließenden elektrischen Strom verursacht.

Der zweite Überbrückungsstellenquerschnitt 10b bzw. das im Bereich der zweiten Überbrückungsstelle 7b angeordnete Überbrückungsmaterial 8 ist insbesondere dazu eingerichtet, dass das im Bereich der zweiten Überbrückungsstelle 7b angeordnete Überbrückungsmaterial 8 bei Erwärmung des zweiten Stromleiters 4b im Bereich der zweiten Überbrückungsstelle 7b infolge eines Stromflusses durch den zweiten Überbrückungsstellenquerschnitt 10b nach ausschließlichem Herstellen der ersten partiellen elektrischen Verbindung nicht schmilzt. Zu diesem Zweck ist beispielsweise der zweite Überbrückungsstellenquerschnitt 10b größer als der erste Überbrückungsstellenquerschnitt 10a ausgebildet.

Dadurch wird ein kaskadenartiges Schmelzen des im Bereich der Überbrückungsstellen 7a, 7b angeordneten Überbrückungsmaterials 8 ermöglicht - d.h. erst schmilzt das an der ersten Überbrückungsstelle 7a mit niedrigem Querschnitt befindliche Überbrückungsmaterial 8 und dann das an der zweiten Überbrückungsstelle 7b mit höherem Querschnitt befindliche Überbrückungsmaterial 8 -, wodurch die partiellen elektrischen Verbindungen zwischen den Stromleiter 4a, 4b ebenfalls kaskadenartig hergestellt werden. Dabei wird mit jeder zusätzlich hergestellten partiellen elektrischen Verbindung der Kontaktwiderstand zwischen den Stromleitern 4a, 4b weiter gesenkt.

Dementsprechend können über das in Figur 1 gezeigte Beispiel hinausgehend weitere Überbrückungsstellen mit weiter ansteigenden Überbrückungsstellenquerschnitten und im Bereich dieser Überbrückungsstellen jeweils angeordnetem Überbrückungsmaterial vorgesehen sein, die eine Fortführung der beispielhaft beschriebenen Kaskadierung erlauben.

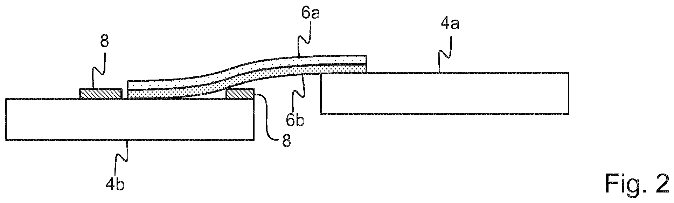

Figur 2 zeigt ein Beispiel eines Überbrückungsschalters 6, der dazu eingerichtet ist, im geschlossenen Zustand einen ersten Stromleiter 4a mit einem zweiten Stromleiter 4b elektrisch zu verbinden. Der Überbrückungsschalter 6 kann vorzugsweise bei der in Figur 1 gezeigten Überbrückungsvorrichtung 3 eingesetzt werden.

Der Überbrückungsschalter 6 ist im gezeigten Beispiel als Bimetallschalter ausgebildet, der sich aus zwei Streifen aus unterschiedlichen Materialien 6a, 6b mit unterschiedlichen Wärmeausdehnungskoeffizienten zusammensetzt und sich daher bei einer Temperaturänderung verbiegt.

Der Überbrückungsschalter 6 ist im vorliegenden Beispiel mit einem ersten Ende, vorzugsweise dauerhaft, am ersten Stromleiter 4a angebracht und relativ zum zweiten Stromleiter 4b so angeordnet, dass das freie zweite Ende bei einer regulären Betriebstemperatur der Energiespeicherzelle (siehe Figur 1), von beispielsweise bis zu 50°C, den zweiten Stromleiter 4b nicht berührt (nicht dargestellt). Vorzugsweise ist der Überbrückungsschalter 6 in diesem Temperaturbereich im Wesentlichen eben bzw. geradlinig oder nur gering verbogen.

Steigt die Temperatur der Energiespeicherzelle jedoch über die reguläre Betriebstemperatur an, etwa in Folge eines Betriebsfehlers, verbiegt sich der Überbrückungsschalter 6 in Richtung des zweiten Stromleiters 4b, so dass sein freies Ende auf dem zweiten Stromleiter 4b zu liegen kommt und diesen elektrisch kontaktiert, wenn die Temperatur der Energiespeicherzelle einen vorgegebenen Temperaturschwellenwert, bei dem beispielsweise eine Zerstörung oder Beschädigung der Energiespeicherzelle kurz bevorsteht, erreicht oder überschreitet.

Durch die auf diese Weise hergestellte erste partielle elektrische Verbindung zwischen dem ersten Stromleiter 4a und dem zweiten Stromleiter 4b kann ein elektrischer Strom zwischen den Stromleitern 4a, 4b fließen, so dass eine zum ersten und zweiten Stromleiter 4a, 4b elektrisch parallel geschalteten Zelle überbrückt werden kann.

Um die erste partielle elektrische Verbindung zu stabilisieren, kann im Bereich des Überbrückungsschalters 6, insbesondere auf dem zweiten Stromleiter 4b, vorzugsweise ein Überbrückungsmaterial 8 angeordnet sein, das dazu eingerichtet ist, durch eine durch den Stromfluss nach Herstellen der ersten partiellen elektrischen Verbindung verursachte Erwärmung des zweiten Stromleiters 4b im Bereich des Überbrückungsschalters 6 zu schmelzen. Das auf diese Weise zum Schmelzen gebrachte Überbrückungsmaterial 8 tritt daraufhin in elektrischen Kontakt mit dem noch freien Ende des Überbrückungsschalter 6 und senkt so den Kontaktwiderstand zwischen dem Überbrückungsschalter 6 und dem zweiten elektrischen Leiter 4b. Dadurch sinkt die durch den Stromfluss bedingte Temperatur im Bereich des Überbrückungsschalters 6 wieder, so dass das geschmolzene Überbrückungsmaterial 8 wieder erstarren und dabei das bis zu diesem Zeitpunkt freie Ende des Überbrückungsschalters 6 am zweiten Stromleiter 4b dauerhaft fixieren kann.

### Bezugszeichenliste

- 1: Energiespeichermodul
- 2: Energiespeicherzelle
- 3: Überbrückungsvorrichtung
- 4a: erster Stromleiter
- 4b: zweiter Stromleiter
- 5: Spalt
- 6: Überbrückungsschalter
- 6a, 6b: Materialen des Überbrückungsschalters
- 7a: erste Überbrückungsstelle
- 7b: zweite Überbrückungsstelle
- 8: Überbrückungsmaterial
- 9: Isolationselement
- 10a: erster Überbrückungsstellenquerschnitt
- 10b: zweiter Überbrückungsstellenquerschnitt

## Patentansprüche

1. Elektrochemisches Energiespeichermodul (1), insbesondere Lithium-Ionen-Batterie, mit mindestens einer Energiespeicherzelle (2) und mindestens einer Überbrückungsvorrichtung (3), die mit der mindestens einen Energiespeicherzelle (2) elektrisch parallel geschaltet ist, wobei die mindestens eine Überbrückungsvorrichtung (3) aufweist:
- einen ersten Stromleiter (4a) mit mindestens einer Überbrückungsstelle (7a), die einen Überbrückungsstellenquerschnitt (10a) aufweist;
- einen vom ersten Stromleiter (4a) durch einen Spalt (5) beabstandeten zweiten Stromleiter (4b);
- einen Überbrückungsschalter (6) zum Herstellen einer ersten partiellen elektrischen Verbindung zwischen dem ersten Stromleiter (4a) und dem zweiten Stromleiter (4b); und
- ein im Bereich der Überbrückungsstelle (7a) angeordnetes Überbrückungsmaterial (8),
wobei der Überbrückungsstellenquerschnitt (10a) und/oder das Überbrückungsmaterial (8) derart eingerichtet ist bzw. sind, dass das Überbrückungsmaterial (8) infolge einer Erwärmung der Überbrückungsstelle (7a), die durch einen elektrischen Strom, der durch den Überbrückungsstellenquerschnitt (10a) nach Herstellen der ersten partiellen elektrischen Verbindung fließt, verursacht wird, schmilzt und dabei eine zweite partielle elektrische Verbindung zwischen dem ersten Stromleiter (4a) und dem zweiten Stromleiter (4b) herstellt, **dadurch gekennzeichnet, dass** der erste und/oder der zweite Stromleiter (4a, 4b) mehrere Überbrückungsstellen (7a, 7b) mit unterschiedlichen Überbrückungsstellenquerschnitten (10a, 10b) aufweist bzw. aufweisen, in deren Bereich jeweils Überbrückungsmaterial (8) angeordnet ist, wobei der erste Stromleiter (4a) einen ersten Stromleiterquerschnitt und/oder der zweite Stromleiter (4b) einen zweiten Stromleiterquerschnitt aufweist und der Überbrückungsstellenquerschnitt (10a, 10b) der mindestens einen Überbrückungsstelle (7a, 7b) kleiner ist als der erste bzw. der zweite Stromleiterquerschnitt und wobei die Überbrückungsstellenquerschnitte (10a, 10b) und/oder das Überbrückungsmaterial (8) im Bereich der jeweiligen Überbrückungsstelle (7a, 7b) derart eingerichtet sind bzw. ist, dass das Überbrückungsmaterial (8) im Bereich der jeweiligen Überbrückungsstelle (7b) infolge einer Erwärmung der jeweiligen Überbrückungsstelle (7b), die durch einen elektrischen Strom verursacht wird, der durch den jeweiligen Überbrückungsstellenquerschnitt (10b) nach Herstellen einer oder mehrerer partieller elektrischer Verbindungen zwischen dem ersten Stromleiter (4a) und dem zweiten Stromleiter (4b) im Bereich von einer bzw. mehreren Überbrückungsstellen (7a) mit geringerem Überbrückungsstellenquerschnitt (10a) fließt, schmilzt und dabei eine weitere partielle elektrische Verbindung zwischen dem ersten Stromleiter (4a) und dem zweiten Stromleiter (4b) herstellt.

2. Elektrochemisches Energiespeichermodul (1) nach Anspruch 1, wobei der Überbrückungsschalter (6) als Bimetallschalter ausgebildet ist.

3. Elektrochemisches Energiespeichermodul (1) nach einem der vorangehenden Ansprüche, wobei im Bereich des Überbrückungsschalters (6) auf dem ersten oder zweiten Stromleiter (4a, 4b) Überbrückungsmaterial (8) angeordnet und derart eingerichtet ist, dass es infolge einer Erwärmung des Überbrückungsschalters (6) und/oder des ersten Stromleiters (4a) und/oder des zweiten Stromleiters (4b), die durch einen elektrischen Strom verursacht wird, der durch den Überbrückungsschalter (6) und/oder den ersten Stromleiter (4a) und/oder den zweiten Stromleiter (4b) fließt, schmilzt und beim Wiedererstarren den Überbrückungsschalter (6) am ersten bzw. zweiten Stromleiter (4a, 4b) fixiert.

4. Elektrochemisches Energiespeichermodul (1) nach einem der vorangehenden Ansprüche, wobei das Überbrückungsmaterial (8) Zinn ist.

5. Elektrochemisches Energiespeichermodul (1) nach einem der vorangehenden Ansprüche, wobei in dem Spalt (5) zwischen dem ersten und zweiten Stromleiter (4a, 4b) ein Isolationsmaterial (9) angeordnet ist.

6. Elektrochemisches Energiespeichermodul (1) nach einem der vorangehenden Ansprüche, wobei der Überbrückungsschalter (6) dazu eingerichtet ist, die erste partielle elektrische Verbindung zwischen dem ersten Stromleiter (4a) und dem zweiten Stromleiter (4b) bei Erreichen oder Überschreiten eines vorgegebenen Temperaturschwellenwerts der mindestens einen Energiespeicherzelle (2) herzustellen.

7. Elektrochemisches Energiespeichermodul (1) nach Anspruch 6 mit einer Steuerungseinrichtung, die dazu eingerichtet ist, die erste partielle elektrische Verbindung bei Erreichen oder Überschreiten des vorgegebenen Temperaturschwellenwerts der mindestens einen Energiespeicherzelle (2) mittels des Überbrückungsschalters (6) herzustellen.

8. Fahrzeug, insbesondere Kraftfahrzeug, mit einem elektrochemischen Energiespeichermodul (1) nach einem der vorangehenden Ansprüche.

## Claims

1. Electrochemical energy storage module (1), in particular lithium-ion battery, comprising at least one energy storage cell (2) and at least one bridging device (3) which is electrically connected in parallel with the at least one energy storage cell (2), wherein the at least one bridging device (3) comprises:
- a first current conductor (4a) having at least one bridging point (7a) having a bridging point cross-section (10a);
- a second current conductor (4b), which is spaced apart from the first current conductor (4a) by a gap (5);
- a bridging switch (6) for establishing a first partial electrical connection between the first current conductor (4a) and the second current conductor (4b); and
- a bridging material (8) arranged in the region of the bridging point (7a),
wherein the bridging point cross-section (10a) and/or the bridging material (8) are/is configured in such a way that the bridging material (8) melts as a consequence of heating of the bridging point (7a) caused by an electric current that flows through the bridging point cross-section (10a) after the first partial electrical connection has been established, and in the process establishes a second partial electrical connection between the first current conductor (4a) and the second current conductor (4b), **characterized in that** the first and/or the second current conductor (4a, 4b) have/has a plurality of bridging points (7a, 7b) having different bridging point cross-sections (10a, 10b), in the region of which bridging material (8) is respectively arranged, wherein the first current conductor (4a) has a first current conductor cross-section and/or the second current conductor (4b) has a second current conductor cross-section, and the bridging point cross-section (10a, 10b) of the at least one bridging point (7a, 7b) is smaller than the first and/or the second current conductor cross-section and wherein the bridging point cross-sections (10a, 10b) and/or the bridging material (8) in the region of the respective bridging point (7a, 7b) are/is configured in such a way that the bridging material (8) in the region of the respective bridging point (7b) melts as a consequence of heating of the respective bridging point (7b) caused by an electric current that flows through the respective bridging point cross-section (10b) after the establishment of one or a plurality of partial electrical connections between the first current conductor (4a) and the second current conductor (4b) in the region of one or a plurality of bridging points (7a) having a smaller bridging point cross-section (10a), and in the process establishes a further partial electrical connection between the first current conductor (4a) and the second current conductor (4b).

2. Electrochemical energy storage module (1) according to Claim 1, wherein the bridging switch (6) is embodied as a bimetallic switch.

3. Electrochemical energy storage module (1) according to either of the preceding claims, wherein in the region of the bridging switch (6) on the first or second current conductor (4a, 4b) bridging material (8) is arranged and configured in such a way that it melts as a consequence of heating of the bridging switch (6) and/or of the first current conductor (4a) and/or of the second current conductor (4b) caused by an electric current that flows through the bridging switch (6) and/or the first current conductor (4a) and/or the second current conductor (4b), and, upon solidifying again, fixes the bridging switch (6) to the first and/or second current conductor (4a, 4b), respectively.

4. Electrochemical energy storage module (1) according to any of the preceding claims, wherein the bridging material (8) is tin.

5. Electrochemical energy storage module (1) according to any of the preceding claims, wherein an insulation material (9) is arranged in the gap (5) between the first and second current conductors (4a, 4b).

6. Electrochemical energy storage module (1) according to any of the preceding claims, wherein the bridging switch (6) is configured to establish the first partial electrical connection between the first current conductor (4a) and the second current conductor (4b) when a predefined temperature threshold value of the at least one energy storage cell (2) is reached or exceeded.

7. Electrochemical energy storage module (1) according to Claim 6 comprising a control device configured to establish the first partial electrical connection by means of the bridging switch (6) when the predefined temperature threshold value of the at least one energy storage cell (2) is reached or exceeded.

8. Vehicle, in particular motor vehicle, comprising an electrochemical energy storage module (1) according to any of the preceding claims.

## Revendications

1. Module électrochimique de stockage d'énergie (1), en particulier batterie lithium-ion, comprenant au moins une cellule de stockage d'énergie (2) et au moins un dispositif de pontage (3) qui est monté électriquement en parallèle avec ladite au moins une cellule de stockage d'énergie (2), ledit au moins un dispositif de pontage (3) présentant :
- un premier conducteur électrique (4a) pourvu d'au moins un point de pontage (7a) qui présente une section transversale de point de pontage (10a) ;
- un deuxième conducteur électrique (4b) espacé par rapport au premier conducteur électrique (4a) par un intervalle (5) ;
- un commutateur de pontage (6) permettant d'établir une première connexion électrique partielle entre le premier conducteur électrique (4a) et le deuxième conducteur électrique (4b) ; et
- un matériau de pontage (8) disposé au niveau du point de pontage (7a),
dans lequel la section transversale de point de pontage (10a) et/ou le matériau de pontage (8) sont agencés de telle sorte que le matériau de pontage (8) fond suite à un échauffement du point de pontage (7a), qui est provoqué par un courant électrique passant par la section transversale de point de pontage (10a) après l'établissement de la première connexion électrique partielle, et établit alors une deuxième connexion électrique partielle entre le premier conducteur électrique (4a) et le deuxième conducteur électrique (4b),
**caractérisé en ce que** le premier et/ou le deuxième conducteur électrique (4a, 4b) présentent plusieurs points de pontage (7a, 7b) ayant différentes sections transversales de point de pontage (10a, 10b) et au niveau desquels respectivement un matériau de pontage (8) est disposé, dans lequel le premier conducteur électrique (4a) présente une première section transversale de conducteur électrique et/ou le deuxième conducteur électrique (4b) présente une deuxième section transversale de conducteur électrique, et la section transversale de point de pontage (10a, 10b) de l'au moins un point de pontage (7a, 7b) est inférieure à la première ou à la deuxième section transversale de conducteur électrique, et les sections transversales de point de pontage (10a, 10b) et/ou le matériau de pontage (8) étant aménagés au niveau du point de pontage (7a, 7b) respectif de telle sorte que le matériau de pontage (8) fond au niveau du point de pontage (7b) respectif suite à un échauffement du point de pontage (7b) respectif, qui est provoqué par un courant électrique passant par la section transversale de point de pontage (10b) respective après l'établissement d'une ou de plusieurs connexions électriques partielles entre le premier conducteur électrique (4a) et le deuxième conducteur électrique (4b) au niveau d'un ou de plusieurs points de pontage (7a) ayant une section transversale de point de pontage (10a) inférieure, et établit alors une autre connexion électrique partielle entre le premier conducteur électrique (4a) et le deuxième conducteur électrique (4b) .

2. Module électrochimique de stockage d'énergie (1) selon la revendication 1, dans lequel le commutateur de pontage (6) est réalisé sous forme de commutateur bimétallique.

3. Module électrochimique de stockage d'énergie (1) selon l'une quelconque des revendications précédentes, dans lequel, au niveau du commutateur de pontage (6), sur le premier ou le deuxième conducteur électrique (4a, 4b), un matériau de pontage (8) est disposé et aménagé de telle sorte qu'il fond suite à un échauffement du commutateur de pontage (6) et/ou du premier conducteur électrique (4a) et/ou du deuxième conducteur électrique (4b), qui est provoqué par un courant électrique passant par le commutateur de pontage (6) et/ou le premier conducteur électrique (4a) et/ou le deuxième conducteur électrique (4b), et en cas de resolidification, fixe le commutateur de pontage (6) au premier ou au deuxième conducteur électrique (4a, 4b).

4. Module électrochimique de stockage d'énergie (1) selon l'une quelconque des revendications précédentes, dans lequel le matériau de pontage (8) est de l'étain.

5. Module électrochimique de stockage d'énergie (1) selon l'une quelconque des revendications précédentes, dans lequel un matériau isolant (9) est disposé dans l'intervalle (5) entre le premier et le deuxième conducteur électrique (4a, 4b).

6. Module électrochimique de stockage d'énergie (1) selon l'une quelconque des revendications précédentes, dans lequel le commutateur de pontage (6) est aménagé pour établir la première connexion électrique partielle entre le premier conducteur électrique (4a) et le deuxième conducteur électrique (4b) lorsqu'une valeur seuil de température prédéfinie de ladite au moins une cellule de stockage d'énergie (2) est atteinte ou dépassée.

7. Module électrochimique de stockage d'énergie (1) selon la revendication 6, comprenant un dispositif de commande qui est agencé pour établir au moyen du commutateur de pontage (6) la première connexion électrique partielle lorsqu'une valeur seuil de température de ladite au moins une cellule de stockage d'énergie (2) est atteinte ou dépassée.

8. Véhicule, en particulier véhicule automobile, comprenant un module électrochimique de stockage d'énergie (1) selon l'une quelconque des revendications précédentes.
